# EUROPEAN PATENT SPECIFICATION

(11) **EP 2 852 136 B1**
(45) Date of publication and mention of the grant of the patent: **03.07.2019**
(21) Application number: 14754611.3
(22) Date of filing: 14.02.2014
(51) Int. Cl.: H04M 1/725, H04M 1/60, H04R 29/00

(54) **METHODS FOR CONTROLLING CALL AUDIO CHANNEL OF COMMUNICATION TERMINAL, AND COMMUNICATION TERMINAL**
VERFAHREN ZUR STEUERUNG DES ANRUFAUDIOKANALS EINES KOMMUNIKATIONSENDGERÄTS SOWIE KOMMUNIKATIONSENDGERÄT
PROCÉDÉS DE COMMANDE DE CANAL D'APPEL AUDIO DE TERMINAL DE COMMUNICATION, ET TERMINAL DE COMMUNICATION

(30) Priority: 25.02.2013 CN 201310059051
(43) Date of publication of application: 25.03.2015
(73) Proprietor: Huawei Device Co., Ltd., Dongguan, Guangdong 523808 (CN)
(72) Inventor: WU, Gang, Shenzhen Guangdong 518129 (CN)
(74) Representative: Thun, Clemens
(86) International application number: PCT/CN2014/072088
(87) International publication number: WO 2014/127712

(56) References cited:
- EP-A2- 2 424 198
- WO-A1-2014/098809
- CN-A- 101 867 657
- CN-A- 103 200 311
- US-A1- 2009 023 479
- US-A1- 2009 023 479
- US-A1- 2009 323 973

## Description

### TECHNICAL FIELD

The present invention pertains to the field of communications technologies, and in particular, relates to a method for controlling a call audio channel on a communications terminal, and a communications terminal.

### BACKGROUND

At present, if one or more external audio devices (for example, a headset) are connected to a communications terminal in a call, a current call audio channel is used by default according to a certain rule in the call. For example, if a Bluetooth headset is connected to the communications terminal, a call is made by using the Bluetooth headset by default; if a wired headset is connected to the communications terminal, a call is made by using the wired headset by default. When a user forgets that the Bluetooth headset has been connected to the communications terminal, and the user would like to directly use an internal audio device of the communications terminal to make a call, the internal audio device of the communications terminal cannot be used normally to make the call. In this case, it is necessary to manually switch a default call audio channel to a desired call audio channel.

For example, US 2009/0323973 A1 refers to a method of selecting for use an audio input device such as a microphone based on the quality of sound sampled from multiple available input devices. The sample is analyzed to determine a background sound level and a peak deviation level above the background. That device having the greatest deviation above the background is selected and all other input devices deactivated. The selection process may also require that the peak value meet or exceed some threshold value in order to be considered. The sampling may occur starting with system activation or may occur prior to activation with selection occurring after system activation.

Further, EP 2 424 198 A2 refers to a user's wireless communication device communicating cellular signals with a remote party over a wireless communications network and short-range wireless signals with a headset worn by the user. Upon receiving an incoming call, a controller in the user's device determines whether a microphone integrated with the user's device, or a microphone integrated with the headset, is closest to the user's mouth. Based on that determination, the controller routes the incoming audio signals to whichever speaker is associated with the microphone that is closest to the user's mouth.

In addition, US 2009/0023479 A1 refers to methods, systems, and apparatuses for routing received telephone call audio through a mobile phone handset or associated wireless headset are described. The handset is configured to wirelessly communicate with a headset. An audio signal is received that is generated by a microphone of the handset or headset. The audio signal is compared to a reference signal to generate an audio source determination. In a first aspect, the comparison is performed in the handset. In an alternative aspect, the comparison is performed in the headset. One of the handset or headset is selected to provide further audio information associated with a received telephone call based on the audio source determination.

### SUMMARY

An objective of embodiments of the present invention is to provide a method for controlling a call audio channel on a communications terminal, so as to resolve a problem in prior art that a call audio channel needs to be switched manually.

In a first aspect a method for controlling a call audio channel on a communications terminal comprising an internal audio device and one external audio device is provided, wherein the method comprises:
- detecting a first voice signal received by a microphone of the internal audio device of the communications terminal and detecting a second voice signal received by a microphone of the external audio device of the communications terminal;
- comparing a first voice signal strength value and a second voice signal strength value;
- when a proportion of an absolute value of a strength difference between the first and second voice signal strength values to a strength value of either the first or second voice signal having a smallest strength value is greater than a preset value, selecting an audio device with a greatest received voice signal strength value as a target audio device;
- when the proportion of the absolute value of the strength difference between the first and second voice signal strength values to either the first or the second voice signal having the smallest strength value is less than or equal to the preset value, maintaining a default audio device as the target audio device;
- setting the target audio device as a current call audio channel.

In a second aspect a method for controlling a call audio channel on a communications terminal comprising an internal audio device and more than two external audio devices is provided, wherein the method comprises:
- detecting a voice signal received by a microphone of the internal audio device of the communications terminal and detecting, for each of the more than two external audio devices, a voice signal received by a microphone of the external audio device of the communications terminal;
- selecting those two voice signals of two audio devices among the one internal audio device and the more than two external audio devices with voice signal strength values ranked top two among all voice signal strength values of the one internal audio device and the more than two external audio devices; when a proportion of an absolute value of a strength difference between the two voice signal strength values to a strength value having a smallest strength value among the two voice signal strength values is greater than a preset value, selecting an audio device with a greatest received voice signal strength value as a target audio device;
- when the proportion of the absolute value of the strength difference between the two voice signal strength values to the strength value having the smallest strength value among the two voice signal strength values is less than or equal to the preset value, maintaining a default audio device as the target audio device;
- setting the target audio device as a current call audio channel.

In a first implementation form of the first or second aspect the detecting the voice signal comprises:
detecting the voice signal that is received within a preset period of time.

In a second implementation form of the first aspect the method further comprises: generating a voice prompt or a text prompt for notifying which one of the audio devices is selected as the target audio device.

In a third aspect a communications terminal is provided configured and intended to perform any of the above methods.

In the embodiments of the present invention, first, a voice signal received by a microphone of audio devices connected to a communications terminal is detected, where the audio devices include an internal audio device and at least one external audio device; then, an audio device with a received voice signal meeting a preset condition is selected as a target audio device; finally, the target audio device is set as a current call audio channel. In this way, a user neither needs to remember an audio device that has been connected nor needs to manually switch to a desired call audio channel, which brings convenience to the user.

The invention is defined in the independent claims and various embodiments are defined in the dependent claims. The embodiments described below are examples for better understanding the invention. The embodiments which do not fall within the scope of the claims do not describe part of the present invention.

### BRIEF DESCRIPTION OF DRAWINGS

FIG. 1 is an implementation flowchart of a method for controlling a call audio channel on a communications terminal according to an embodiment of the present invention;
FIG. 2 is an architecture diagram of an apparatus for controlling a call audio channel on a communications terminal according to an embodiment of the present invention; and
FIG. 3 is a schematic diagram of structural composition of a communications terminal according to an embodiment of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

In the embodiments of the present invention, first, a voice signal received by a microphone of audio devices connected to a communications terminal is detected, where the audio devices include an internal audio device and at least one external audio device; then, an audio device with a received voice signal meeting a preset condition is selected as a target audio device; finally, the target audio device is set as a current call audio channel. In this way, a user neither needs to remember an audio device that has been connected nor needs to manually switch to a desired call audio channel, which brings convenience to the user.

The following gives a detailed description of implementation of the present invention with reference to specific embodiments.

### Embodiment 1

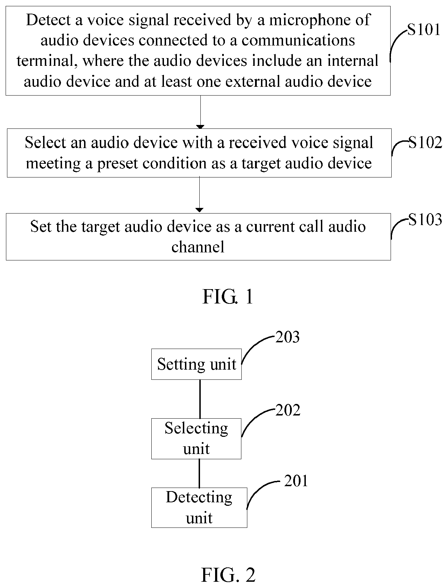

FIG. 1 shows an implementation flowchart of a method for controlling a call audio channel on a communications terminal according to this embodiment of the present invention, which is described in detail as follows:
In step S101, a voice signal received by a microphone of audio devices connected to the communications terminal is detected, where the audio devices include an internal audio device and at least one external audio device.

Generally, besides a built-in audio device (that is, an internal audio device), a communications terminal (for example, a mobile phone) is further equipped with one or more external audio devices. The internal audio device of the communications terminal and the external audio device of the communications terminal both include a microphone and an earpiece. The external audio device is a wired headset or/and a wireless headset (for example, a Bluetooth headset) connected to the communications terminal; that is, an individual wired headset or an individual wireless headset may be connected to the communications terminal, and both a wired headset and a wireless headset may also be connected to the communications terminal.

In this embodiment of the present invention, a voice signal received by a microphone of the audio devices connected to the communications terminal is detected. Because a sound signal received by a microphone is generally noisy, voice volume detection is enabled at this time, no matter which audio device is used as a call audio channel. In addition, once a call audio channel is manually switched in a call, the automatic detection function is disabled in the call, a channel is not automatically switched, and interaction is performed according to a call audio channel set by a user. In this way, confusion is avoided, so that manual switching and automatic switching of a call audio channel do not interfere with each other, and practicality is strong.

Optionally, a voice signal that is received within a preset period of time by a microphone of the audio devices connected to the communications terminal (for example, 2s or 3s) is detected. In this way, it is necessary to detect a voice signal received by each microphone in a period of time (for example, 2s or 3s), so as to avoid switching of a call audio channel when another audio device has a very short voice input. For example, switching is performed only when a voice signal remains stronger than a voice signal received by another audio device within 2s, thereby avoiding a misjudgment.

It should be noted that when a terminal has a function of identifying noise, a voice signal received by a microphone in this method refers to voice information from which noise is removed, that is, voice information input by a user. In this way, a target audio device may be determined more accurately.

It should be noted that a current noise reduction technology may identify a difference between a voice and noise, and an identification rate of a voice may be continually improved by using a learning function. For example, an 80dB sound signal may differentiate into a 50dB voice and 30dB noise.

In step S102, an audio device with a received voice signal meeting a preset condition is selected as a target audio device.

In this embodiment of the present invention, the audio device in which the received voice signal meets the preset condition is selected as the target voice device, where the target audio device may be an audio device with a strongest received voice signal. For example, a voice signal received by a microphone of the external audio device of the communications terminal is 30dB, and a voice signal received by a microphone of the internal audio device of the communications terminal is 50dB; then, the internal audio device is selected as the target audio device.

Optionally, if the audio devices include an internal audio device and an external audio device (that is, only one headset is connected), the selecting the audio device in which the received voice signal meets the preset condition as the target audio device includes: comparing a voice signal received by a microphone of the external audio device of the communications terminal with a voice signal received by a microphone of the internal audio device of the communications terminal; and if a proportion of a strength difference between the two voice signals to a smaller strength value is greater than a preset value (for example, 10% or 20%), selecting an audio device with a greater received voice signal strength value as the target audio device. In this way, only when a difference between strength values of the two voice signals is greater, the audio device with the greater received voice signal strength value is selected as the target audio device. If the proportion of the strength difference between the two voice signals to the smaller strength value is less than or equal to the preset value (for example, 10% or 20%), an original call audio channel is maintained (that is, a call is made by using a default call audio channel). That is, if strength values of voice signals that act on two call audio channels are approximate, the original call audio channel is maintained (that is, the call is made by using the default call audio channel), which can also avoid a misjudgment.

Optionally, if the audio devices include an internal audio device and more than two external audio devices (for example, a wireless headset and a wired headset are connected at the same time), the selecting the audio device in which the received voice signal meets the preset condition as the target audio device includes: selecting voice signals of two audio devices with strength of received voice signals ranked top two among the audio devices; and if a proportion of a difference between two selected voice signals to a smaller strength value is greater than a preset value (for example, 10% or 20%), selecting an audio device with a greatest received voice signal strength value as the target audio device. In this way, two voice signals with greater strength values are first selected; only when a difference between the strength values of the two voice signals is greater, the audio device with the greater received voice signal strength value is selected as the target audio device. If the proportion of the strength difference between the two voice signals to the smaller strength value is less than or equal to the preset value (for example, 10% or 20%), an original call audio channel is maintained (that is, a call is made by using a default call audio channel). That is, if strength values of voice signals that act on two call audio channels are approximate, the original call audio channel is maintained (that is, the call is made by using the default call audio channel), which can also avoid a misjudgment.

Optionally, after a call audio channel is switched, a communications terminal may generate text prompt information and display the text prompt information on a screen of the communications terminal. The communications terminal may also generate voice prompt information and play the voice prompt information on a target call audio device, so that a user is prompted that the call audio channel has been switched to the target call audio device, thereby greatly improving usability of the communications terminal.

In step S103, the target audio device is set as a current call audio channel.

In this embodiment of the present invention, the target audio device is set as the current call audio channel; in this way, a user neither needs to remember an audio device that has been connected nor needs to manually switch to a desired call audio channel, which brings convenience to the user.

### Embodiment 2

FIG. 2 shows an apparatus for controlling a call audio channel on a communications terminal according to this embodiment of the present invention, which is described in detail as follows: The apparatus includes a detecting unit 201, a selecting unit 202, and a setting unit 203, where the detecting unit 201 is configured to detect a voice signal received by a microphone of audio devices connected to the communications terminal, and the audio devices include an internal audio device and at least one external audio device; the selecting unit 202 is configured to select an audio device with a received voice signal meeting a preset condition as a target audio device; and the setting unit 203 is configured to set the target audio device as a current call audio channel.

Generally, besides a built-in audio device (that is, an internal audio device), a communications terminal (for example, a mobile phone) is further equipped with one or more external audio devices. The internal audio device of the communications terminal and the external audio device of the communications terminal both include a microphone and an earpiece. The external audio device is a wired headset or/and a wireless headset (for example, a Bluetooth headset) connected to the communications terminal; that is, an individual wired headset or an individual wireless headset may be connected to the communications terminal, and a wired headset and a wireless headset may also be connected to the communications terminal at the same time.

In this embodiment of the present invention, the detecting unit 201 disposed in the communications terminal detects a voice signal received by a microphone of the audio devices connected to the communications terminal. In this way, the voice signal received by the microphone is transmitted to the detecting unit 201, and voice signal strength is detected by the detecting unit 201. Because a sound signal received by a microphone is generally noisy, voice volume detection is enabled at this time, no matter which audio device is used as a call audio channel. In addition, once a call audio channel is manually switched in a call, the automatic detection function is disabled in the call, a channel is not automatically switched, and interaction is performed according to a call audio channel set by a user. In this way, confusion is avoided, so that manual switching and automatic switching of a call audio channel do not interfere with each other, and practicality is strong.

Optionally, a voice signal that is received within a preset period of time by a microphone of the audio devices connected to the communications terminal (for example, 2s or 3s) is detected by the detecting unit 201. In this way, it is necessary to detect a voice signal received by each microphone in a period of time (for example, 2s or 3s), so as to avoid switching of a call audio channel when another audio device has a very short voice input. For example, switching is performed only when a voice signal remains stronger than a voice signal received by another audio device within 2s, thereby avoiding a misjudgment.

It should be noted that when a terminal has a function of identifying noise, a voice signal received by a microphone in this method refers to voice information from which noise is removed, that is, voice information input by a user. In this way, a target audio device may be determined more accurately.

It should be noted that a current noise reduction technology may identify a difference between a voice and noise, and an identification rate of a voice may be continually improved by using a learning function. For example, an 80dB sound signal may differentiate into a 50dB voice and 30dB noise.

In this embodiment of the present invention, the selecting unit 202 may select an audio device with a strongest received voice signal as the target audio device. For example, a voice signal received by a microphone of the external audio device of the communications terminal is 30dB, and a voice signal received by a microphone of the internal audio device of the communications terminal is 50dB; then, the internal audio device is selected as the target audio device.

Optionally, if the audio devices include an internal audio device and an external audio device (that is, only one headset is connected), the selecting, by the selecting unit 202, the audio device in which the received voice signal meets the preset condition as the target audio device includes: comparing a voice signal received by a microphone of the external audio device of the communications terminal with a voice signal received by a microphone of the internal audio device of the communications terminal; and if a proportion of a strength difference between the two voice signals to a smaller strength value is greater than a preset value (for example, 10% or 20%), selecting an audio device with a greater received voice signal strength value as the target audio device. In this way, only when a difference between strength values of the two voice signals is greater, the audio device with the greater received voice signal strength value is selected as the target audio device. If the proportion of the strength difference between the two voice signals to the smaller strength value is less than or equal to the preset value (for example, 10% or 20%), an original call audio channel is maintained (that is, a call is made by using a default call audio channel). That is, if strength values of voice signals that act on two call audio channels are approximate, the original call audio channel is maintained (that is, the call is made by using the default call audio channel), which can also avoid a misjudgment.

Optionally, if the audio devices include an internal audio device and more than two external audio devices (for example, a wireless headset and a wired headset are connected at the same time), the selecting, by the selecting unit 202, the audio device in which the received voice signal meets the preset condition as the target audio device includes: selecting voice signals of two audio devices with strength of received voice signals ranked top two among the audio devices; and if a proportion of a difference between two selected voice signals to a smaller strength value is greater than a preset value (for example, 10% or 20%), selecting an audio device with a greatest received voice signal strength value as the target audio device. In this way, two voice signals with greater strength values are first selected; only when a difference between the strength values of the two voice signals is greater, the audio device with the greater received voice signal strength value is selected as the target audio device. If the proportion of the strength difference between the two voice signals to the smaller strength value is less than or equal to the preset value (for example, 10% or 20%), an original call audio channel is maintained (that is, a call is made by using a default call audio channel). That is, if strength values of voice signals that act on two call audio channels are approximate, the original call audio channel is maintained (that is, the call is made by using the default call audio channel), which can also avoid a misjudgment.

Optionally, the apparatus for controlling a call audio channel on a communications terminal further includes a prompt unit that is configured to generate a voice prompt or a text prompt. In this way, after a call audio channel is switched, a communications terminal may generate text prompt information and display the text prompt information on a screen of the communications terminal. The communications terminal may also generate voice prompt information and play the sound prompt information on a target call audio device, so that a user is prompted that the call audio channel has been switched to the target call audio device, thereby greatly improving usability of the communications terminal.

In this embodiment of the present invention, the setting unit 203 sets the target audio device as the current call audio channel; in this way, a user neither needs to remember an audio device that has been connected nor needs to manually switch to a desired call audio channel, which brings convenience to the user.

It should be noted that a specific operating principle of each forgoing unit is the same as the foregoing and is not repeatedly described herein. In addition, each unit in the foregoing apparatus for automatic switching of a call audio channel on a communications terminal may be a software unit, a hardware unit, or a unit combining software and hardware, where a software unit part may be stored in a computer readable storage medium, such as a ROM/RAM, a magnetic disk, or an optical disc.

### EMBODIMENT 3

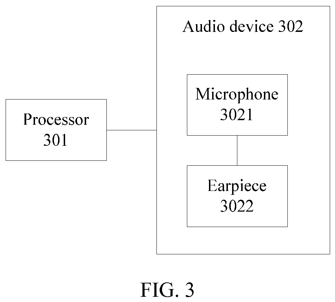

FIG. 3 is a schematic diagram of structural composition of a communications terminal according to an embodiment of the present invention, and the communications terminal includes:
a processor 301 and an audio device 302; where:
the audio device 302 includes a microphone 3021 and an earpiece 3022. The microphone 3021 is configured to receive a voice signal sent by a user and send the voice signal to the processor 301; and the earpiece 3022 is configured to receive the voice signal sent by the processor 301 and convert the voice signal into a sound.

It should be noted that the audio device 302 may include an internal audio device of the communications terminal and at least one external audio device, where the external audio device may include a wired headset and a wireless headset (for example, a Bluetooth headset).

The processor 301 is configured to receive a voice signal sent by a microphone of the audio device 302, where the audio device includes an internal audio device and at least one external audio device; the processor 301 is further configured to select an audio device with a received voice signal meeting a preset condition as a target audio device; the processor 301 is further configured to set the target audio device as a current call audio channel, and send an instruction to the target audio device 302, so that an earpiece 3022 and a microphone 3021 of the target audio device 302 are in a working state. That the earpiece 3022 and the microphone 3021 are in the working state means that a voice of a communications terminal user and a voice of a peer user are transmitted by using the earpiece and the microphone of the target audio device, and an earpiece and a microphone of another audio device are disabled.

Optionally, the processor 301 is further configured to receive a voice signal sent by a microphone of the audio device 302 in a preset period of time. In this way, it is necessary to detect a voice signal received by each microphone in a period of time (for example, 2s or 3s), so as to avoid switching of a call audio channel when another audio device has a very short voice input. For example, switching is performed only when a voice signal remains stronger than a voice signal received by another audio device within 2s, thereby avoiding a misjudgment.

Optionally, the processor 301 is specifically configured to select an audio device with a strongest received voice signal as the target audio device. In this embodiment of the present invention, the processor 301 may select the audio device with the strongest received voice signal as the target audio device. For example, a voice signal received by a microphone of the external audio device of the communications terminal is 30dB, and a voice signal received by a microphone of the internal audio device of the communications terminal is 50dB; then, the internal audio device is selected as the target audio device.

Optionally, if the audio device includes an internal audio device and one external audio device, the processor 301 is specifically configured to compare a voice signal received by a microphone of the external audio device of the communications terminal with a voice signal received by a microphone of the internal audio device of the communications terminal; and if a proportion of a strength difference between the two voice signals to a smaller strength value is greater than a preset value, select an audio device with a greater received voice signal strength value as the target audio device. In this way, only when a difference between strength values of the two voice signals is greater, the audio device with the greater received voice signal strength value is selected as the target audio device. If the proportion of the strength difference between the two voice signals to the smaller strength value is less than or equal to the preset value (for example, 10% or 20%), an original call audio channel is maintained (that is, a call is made by using a default call audio channel). That is, if strength values of voice signals that act on two call audio channels are approximate, the original call audio channel is maintained (that is, the call is made by using the default call audio channel), which can also avoid a misjudgment.

Optionally, if the audio device includes an internal audio device and more than two external audio devices, the processor 301 is further configured to select voice signals of two audio devices with strength of received voice signals ranked top two among the audio devices; and if a proportion of a difference between two selected voice signals to a smaller strength value is greater than a preset value, select an audio device with a greatest received voice signal strength value as the target audio device. In this way, two voice signals with greater strength values are first selected; only when a difference between the strength values of the two voice signals is greater, the audio device with the greater received voice signal strength value is selected as the target audio device. If the proportion of the strength difference between the two voice signals to the smaller strength value is less than or equal to the preset value (for example, 10% or 20%), an original call audio channel is maintained (that is, a call is made by using a default call audio channel). That is, if strength values of voice signals that act on two call audio channels are approximate, the original call audio channel is maintained (that is, the call is made by using the default call audio channel), which can also avoid a misjudgment.

It should be noted that when a terminal has a function of identifying noise, a voice signal received by a microphone in this method refers to voice information from which noise is removed, that is, voice information input by a user. In this way, a target audio device may be determined more accurately.

It should be noted that a current noise reduction technology may identify a difference between a voice and noise, and an identification rate of a voice may be continually improved by using a learning function. For example, an 80dB sound signal may differentiate into a 50dB voice and 30dB noise.

Optionally, the processor 301 is further configured to generate a voice prompt and send the voice prompt information to the earpiece 3022.

Optionally, the communications terminal further includes a display screen. The processor 301 is further configured to generate a text prompt and send the text prompt to the display screen; and the display screen is configured to display the text prompt generated by the processor 301. Therefore, a user is prompted that the call audio channel has been switched to the target call audio device, thereby greatly improving usability of the communications terminal.

In this embodiment of the present invention, the processor 301 sets the target audio device as the current call audio channel; in this way, a user neither needs to remember an audio device that has been connected nor needs to manually switch to a desired call audio channel, which brings convenience to the user.

The foregoing descriptions are merely exemplary embodiments of the present invention, but are not intended to limit the present invention. Any modification, equivalent replacement, or improvement made without departing from the principle of the present invention should fall within the protection scope of the present invention.

## Claims

1. A method for controlling a call audio channel on a communications terminal comprising an internal audio device and one external audio device, wherein the method comprises:
• detecting a first voice signal received by a microphone of the internal audio device of the communications terminal and detecting a second voice signal received by a microphone of the external audio device of the communications terminal (S101); wherein either the first internal audio device or the external audio device is set as a default audio device for a call audio channel;
• comparing a first voice signal strength value and a second voice signal strength value;
• when a proportion of an absolute value of a strength difference between the first and second voice signal strength values to the strength value of either the first or second voice signal having the smallest strength value is greater than a preset value, selecting the audio device with the greatest received voice signal strength value as a target audio device (S 102);
• when the proportion of the absolute value of the strength difference between the first and second voice signal strength values to either the first or the second voice signal having the smallest strength value is less than or equal to the preset value, maintaining the default audio device as the target audio device (S 102);
• setting the target audio device as a current call audio channel (S 103).

2. A method for controlling a call audio channel on a communications terminal comprising an internal audio device and more than two external audio devices, wherein the method comprises:
• detecting a voice signal received by a microphone of the internal audio device of the communications terminal and detecting, for each of the more than two external audio devices, a voice signal received by a microphone of the external audio device of the communications terminal (S101); wherein one of the internal audio device and the more than two external audio devices is set as a default audio device for a call audio channel;
• selecting those two voice signals of two audio devices among the one internal audio device and the more than two external audio devices with voice signal strength values ranked top two among all voice signal strength values of the one internal audio device and the more than two external audio devices;
• when a proportion of an absolute value of a strength difference between the selected two voice signal strength values to the strength value having the smallest strength value among the selected two voice signal strength values is greater than a preset value, selecting the audio device with the greatest received voice signal strength value as a target audio device (S 102);
• when the proportion of the absolute value of the strength difference between the selected two voice signal strength values to the strength value having the smallest strength value among the selected two voice signal strength values is less than or equal to the preset value, maintaining the default audio device as the target audio device (S 102);
• setting the target audio device as a current call audio channel (S103).

3. The method according to claim 1 or 2, wherein the detecting the voice signal comprises:
detecting the voice signal that is received within a preset period of time.

4. The method according to any one of claims 1 to 3, wherein the method further comprises:
generating a voice prompt or a text prompt for notifying which one of the audio devices is selected as the target audio device.

5. A communications terminal comprising an internal audio device and at least one external audio device, wherein the communications terminal is configured to perform any of the methods according to claims 1 - 4.

## Patentansprüche

1. Verfahren zur Steuerung eines Anruf-Audiokanals auf einem Kommunikationsendgerät, das eine interne Audiovorrichtung und eine externe Audiovorrichtung umfasst, wobei das Verfahren umfasst:
• Erfassen eines ersten Sprachsignals, das von einem Mikrofon der internen Audiovorrichtung des Kommunikationsendgerätes empfangen wird, und Erfassen eines zweiten Sprachsignals, das von einem Mikrofon der externen Audiovorrichtung des Kommunikationsendgerätes (S 101) empfangen wird; wobei entweder die erste interne Audiovorrichtung oder die externe Audiovorrichtung als Standard-Audiovorrichtung für einen Anruf-Audiokanal eingestellt ist;
• Vergleichen eines ersten Sprachsignalstärkewertes und eines zweiten Sprachsignalstärkewertes;
• wenn ein Verhältnis eines Absolutwertes einer Stärkedifferenz zwischen dem ersten und zweiten Sprachsignalstärkewert zum Stärkewert des ersten oder zweiten Sprachsignals mit dem kleinsten Stärkewert größer als ein voreingestellter Wert ist, Auswählen der Audiovorrichtung mit dem größten empfangenen Sprachsignalstärkewert als Zielaudiovorrichtung (S 102);
• wenn das Verhältnis des Absolutwertes der Stärkedifferenz zwischen dem ersten und dem zweiten Sprachsignalstärkewert zu entweder dem ersten oder dem zweiten Sprachsignal mit dem kleinsten Stärkewert kleiner oder gleich dem voreingestellten Wert ist, Beibehalten der Standard-Audiovorrichtung als Zielaudiovorrichtung (S 102);
• Einstellen der Zielaudiovorrichtung als aktuellen Anruf-Audiokanal (S 103).

2. Verfahren zur Steuerung eines Anruf-Audiokanals auf einem Kommunikationsendgerät, das eine interne Audiovorrichtung und mehr als zwei externe Audiovorrichtungen umfasst, wobei das Verfahren umfasst:
• Erfassen eines Sprachsignals, das von einem Mikrofon der internen Audiovorrichtung des Kommunikationsendgerätes empfangen wird, und für jede der mehr als zwei externen Audiovorrichtungen Erfassen eines Sprachsignals, das von einem Mikrofon der externen Audiovorrichtung des Kommunikationsendgerätes (S101) empfangen wird; wobei eine der internen Audiovorrichtungen und die mehr als zwei externen Audiovorrichtungen als Standard-Audiovorrichtung für einen Anruf-Audiokanal eingestellt ist;
• Auswählen dieser beiden Sprachsignale von zwei Audiovorrichtungen aus der einen internen Audiovorrichtung und der mehr als zwei externen Audiovorrichtungen mit Sprachsignalstärkewerten, die unter allen Sprachsignalstärkewerten der einen internen Audiovorrichtung und der mehr als zwei externen Audiovorrichtungen die ersten zwei sind;
• wenn ein Verhältnis eines Absolutwertes einer Stärkedifferenz zwischen den ausgewählten zwei Sprachsignalstärkewerten zu dem Stärkewert mit dem kleinsten Stärkewert unter den ausgewählten zwei Sprachsignalstärkewerten größer als ein voreingestellter Wert ist, Auswählen der Audiovorrichtung mit dem größten empfangenen Sprachsignalstärkewert als Zielaudiovorrichtung (S 102);
• wenn das Verhältnis des Absolutwertes der Stärkedifferenz zwischen den ausgewählten zwei Sprachsignalstärkewerten zu dem Stärkewert mit dem kleinsten Stärkewert unter den ausgewählten zwei Sprachsignalstärkewerten kleiner oder gleich dem voreingestellten Wert ist, Beibehalten der Standard-Audiovorrichtung als Zielaudiovorrichtung (S 102);
• Einstellen der Zielaudiovorrichtung als aktuellen Anruf-Audiokanal (S103).

3. Verfahren nach Anspruch 1 oder 2, wobei das Erfassen des Sprachsignals umfasst: Erfassen des Sprachsignals, das innerhalb einer vorgegebenen Zeitspanne empfangen wird.

4. Verfahren nach einem der Ansprüche 1 bis 3, wobei das Verfahren ferner umfasst: Erzeugen einer Sprachaufforderung oder einer Textaufforderung zur Benachrichtigung, welches der Audiovorrichtungen als Zielaudiovorrichtung ausgewählt ist.

5. Kommunikationsendgerät, umfassend eine interne Audiovorrichtung und mindestens eine externe Audiovorrichtung, wobei das Kommunikationsendgerät zum Durchführen eines der Verfahren nach den Ansprüchen 1 - 4 ausgelegt ist.

## Revendications

1. Procédé de commande d'un canal d'appel audio sur un terminal de communication comprenant un dispositif audio interne et un dispositif audio externe, dans lequel le procédé comprend :
• la détection d'un premier signal vocal reçu par un microphone du dispositif audio interne du terminal de communication et la détection d'un second signal vocal reçu par un microphone du dispositif audio externe du terminal de communication (S101) ; dans lequel soit le premier dispositif audio interne, soit le dispositif audio externe est réglé en tant que dispositif audio par défaut pour un canal d'appel audio ;
• la comparaison d'une première valeur d'intensité de signal vocal et d'une seconde valeur d'intensité de signal vocal ;
• lorsqu'une proportion d'une valeur absolue d'une différence d'intensité entre les première et seconde valeurs d'intensité de signal vocal par rapport à la valeur d'intensité soit du premier, soit du second signal vocal ayant la valeur d'intensité la plus faible est supérieure à une valeur prédéfinie, sélectionner le dispositif audio ayant la valeur d'intensité de signal vocal reçu la plus importante en tant que dispositif audio cible (S102) ;
• lorsque la proportion de la valeur absolue de la différence d'intensité entre les première et seconde valeurs d'intensité de signal vocal soit du premier, soit du second signal vocal ayant la valeur d'intensité la plus faible est inférieure ou égale à la valeur prédéfinie, conserver le dispositif audio par défaut en tant que dispositif audio cible (S102) ;
• régler le dispositif audio cible en tant que canal d'appel audio courant (S103).

2. Procédé de commande d'un canal d'appel audio sur un terminal de communication comprenant un dispositif audio interne et plus de deux dispositifs audio externes, dans lequel le procédé comprend :
• la détection d'un signal vocal reçu par un microphone du dispositif audio interne du terminal de communication et la détection, pour chacun des plus de deux dispositifs audio externes, d'un signal vocal reçu par un microphone du dispositif audio externe du terminal de communication (S101) ; dans lequel l'un du dispositif audio interne et les plus de deux dispositifs audio externes sont réglés en tant que dispositif audio par défaut pour un canal d'appel audio ;
• la sélection de ces deux signaux vocaux des deux dispositifs audio parmi le dispositif audio interne et les plus de deux dispositifs audio externes ayant des valeurs d'intensité de signal vocal classées les deux premières parmi toutes les valeurs d'intensité de signal vocal du dispositif audio interne et des plus de deux dispositifs audio externes ;
• lorsqu'une proportion d'une valeur absolue d'une différence d'intensité entre les deux valeurs d'intensité de signal vocal sélectionnées par rapport à la valeur d'intensité ayant la valeur d'intensité la plus faible parmi les deux valeurs d'intensité de signal vocal sélectionnées est supérieure à une valeur prédéfinie, sélectionner le dispositif audio ayant la valeur d'intensité de signal vocal reçu la plus importante en tant que dispositif audio cible (S 102) ;
• lorsque la proportion de la valeur absolue de la différence d'intensité entre les deux valeurs d'intensité de signal vocal sélectionnées par rapport à la valeur d'intensité ayant la valeur d'intensité la plus faible parmi les deux valeurs d'intensité de signal vocal sélectionnées est inférieure ou égale à la valeur prédéfinie, conserver le dispositif audio par défaut en tant que dispositif audio cible (S 102) ;
• régler le dispositif audio cible en tant que canal d'appel audio courant (S103).

3. Procédé selon la revendication 1 ou 2, dans lequel la détection du signal vocal comprend :
la détection du signal vocal qui est reçu au sein d'une période de temps prédéfinie.

4. Procédé selon l'une quelconque des revendications 1 à 3, dans lequel le procédé comprend en outre :
la génération d'un guide vocal ou d'un guide textuel permettant de notifier lequel des dispositifs audio est sélectionné en tant que dispositif audio cible.

5. Terminal de communication comprenant un dispositif audio interne et au moins un dispositif audio externe, dans lequel le terminal de communication est configuré pour mettre en oeuvre l'un quelconque des procédés selon les revendications 1 à 4.
